Europäisches Patentamt

European Patent Office

Office européen des brevets

(19)

(11) Veröffentlichungsnummer: **0 045 021**
**A2**

(12) **EUROPÄISCHE PATENTANMELDUNG**

(21) Anmeldenummer: **81105637.3**

(22) Anmeldetag: **17.07.81**

(51) Int. Cl.³: **G 06 K 7/016**

(30) Priorität: **24.07.80 DE 3028104**

(43) Veröffentlichungstag der Anmeldung: **03.02.82**
**Patentblatt 82/5**

(84) Benannte Vertragsstaaten: **AT BE CH FR GB IT LI NL SE**

(71) Anmelder: **COMPUTER GESELLSCHAFT KONSTANZ MBH, Max-Strohmeyer-Strasse 116, D-7750 Konstanz (DE)**

(72) Erfinder: **Neidhart, Erich, Ing. grad., Lindauerstrasse 33, D-7750 Konstanz (DE)**
Erfinder: **Mittelbach, Helmut, Dipl.-Ing., Lindauerstrasse 40, D-7750 Konstanz (DE)**

(74) Vertreter: **Mehl, Ernst, Dipl.-Ing. et al, Postfach 22 01 76, D-8000 München 22 (DE)**

(54) **Einrichtung zum Verarbeiten von maschinenlesbaren Belegen.**

(57) Zur Erzielung eines zeitunkritischen ON-LINE-Betriebes ist im Zuge der Belegtransport-Vorrichtung zwischen Leseeinrichtung (LE) und einer ersten, von der Datenverarbeitungsanlage steuerbaren Vorrichtung, z.B. einer Mikrofilmeinrichtung (MF) oder Beleg-Ablagevorrichtung (BA) ein mechanischer Belegpufferspeicher (BPS) vorgesehen, dem zur parallelen Pufferung der gelesenen Daten (BD) ein elektronischer Datenpuffer (BDS) zugeordnet ist. Der Belegpufferspeicher (BPS) weist ferner einen Belegsensor (LS3) auf, durch den der Belegtransport über die der Datenverarbeitungsanlage zugeordnete Steuereinrichtung (CCB) in der Weise beeinflußbar ist, daß bei fehlender Konzidenz zwischen Beleg und der von der Datenverarbeitungsanlage gesendeten belegbezogenen Steuerinformation (CD) im Falle nicht rechtzeitig eintreffender Steuerdaten der Belegtransport angehalten wird.

Einrichtung zum Verarbeiten von maschinenlesbaren
Belegen

Die Erfindung bezieht sich auf eine Einrichtung gemäß
dem Oberbegriff des Hauptanspruchs.

Belegverarbeitungsmaschinen, die im sogenannten ON-
LINE-Betrieb arbeiten, stellen an die Betriebssysteme
angeschlossener Datenverarbeitungsanlagen große zeitliche Anforderungen, weil die Belegverarbeitungseinrichtung zu jedem Beleg eine individuelle Behandlung
durch die Datenverarbeitungsanlage verlangt und zwar
in der Zeit, in der der gelesene Beleg die Belegtransportstrecke zwischen Lesestation und der ersten von
der Datenverarbeitungsanlage zu steuernden Einrichtung,
beispielsweise Stempeleinrichtung, Belegablagefach o.ä.,
durchläuft. In dieser Zeit muß nämlich die Datenverarbeitungsanlage die Belegdaten von der Belegverarbeitungsmaschine abholen, die Kriterien für die Fachablage und gegebenenfalls für den vorhergehenden Stempelaufdruck zu jedem Beleg ermitteln und diese Informationen an die Belegverarbeitungseinrichtung zurückmelden.

Es ist offensichtlich, daß dies insbesondere große
komfortable Betriebssysteme vor nahezu unlösbare Probleme stellt, da einerseits der kontinuierliche Belegtransport aus Gründen eines günstigen Preis-Leistungsverhältnisses möglichst nicht gestört werden soll und
andererseits sich der Belegleser gegenüber dem Rechner
"zeitunkritisch" verhalten, d.h. keine Anforderungen

Sta 1 Stl / 18.07.80

0045021

an seine Reaktionszeit stellen soll.

Der vorliegenden Erfindung liegt deshalb die Aufgabe zugrunde, für das aufgezeigte Problem einen möglichst einfachen Lösungsweg anzugeben, mit dem ein zeitunkritisches Verhalten der Belegverarbeitungseinrichtung bei möglichst optimaler Beleg-Durchlaufleistung gewährleistet ist.

Diese Aufgabe wird erfindungsgemäß mit den kennzeichnenden Merkmalen des Hauptanspruchs gelöst. Durch die mechanische Pufferung der Belege bei gleichzeitiger elektronischer Zwischenspeicherung der zugehörigen Belegdaten wird die zeitkritische Phase einer im ON-LINE-Betrieb arbeitenden Belegverarbeitungseinrichtung in vorteilhafter Weise weitgehend entschärft, so daß nur noch in sehr seltenen Fällen eine mechanische Unterbrechung des Belegtransportes notwendig sein wird.

Vorteilhafte Weiterbildungen der Erfindung sind in den Unteransprüchen angegeben.

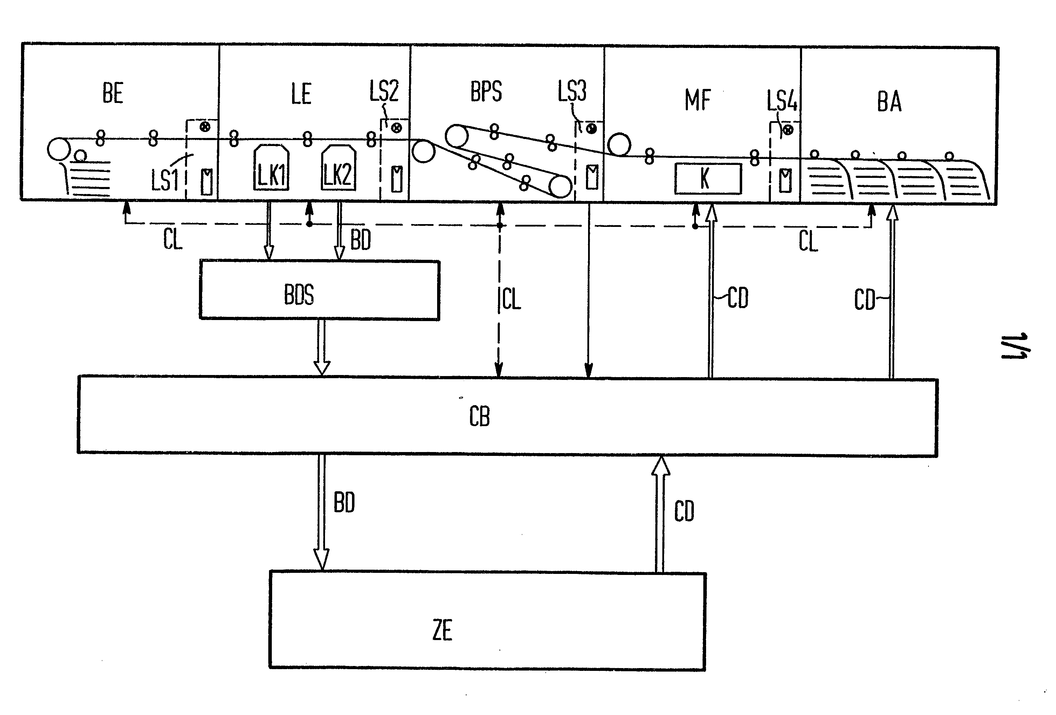

Im folgenden wird ein Ausführungsbeispiel der Erfindung anhand der Zeichnung näher erläutert.

Die in der Figur schematisch dargestellte Belegverarbeitungseinrichtung ist aus mehreren Funktionsmodulen aufgebaut. Sie besteht im einzelnen aus einer Belegeingabestation BE mit einer Einrichtung zur Belegvereinzelung, einer Leseeinrichtung LE, einem Belegpufferspeicher BPS und einer Belegablage BA mit mehreren Ablagefächern. Zwischen Belegpufferspeicher BPS und Belegablage Ba können verschiedene, ebenfalls modulartig aufgebaute Zusatzeinrichtungen vorgesehen werden, wie z.B. die in der Figur anhand

0045021

einer Kamera schematisch dargestellte Mikrofilmeinrichtung MF, ferner Belegstempeleinrichtungen, Belegcodiereinrichtungen oder dergleichen.

Die Belegeingabe BE ist so aufgebaut, daß die stapelweise bereitgestellten Belege einem Vereinzeler zugeführt werden, der den jeweils anliegenden Beleg mittels Vorschubrollen so weit vorschiebt, bis er von Vereinzeler-Transportrollen erfaßt wird. Aufgrund von unterschiedlichen Drehgeschwindigkeiten der Vorschubrollen und der Transportrollen resultiert eine Beleglücke, die mittels einer Lichtschranke LS1 überwacht wird. Der vereinzelte Beleg wird in der nachfolgenden Leseeinrichtung LE z.B. optisch mittels zweier Leseköpfe LK1, LK2 gelesen und anschließend dem mechanischen Belegpufferspeicher BPS zugeführt. Der mechanische Belegpufferspeicher BPS ist vorzugsweise als S-förmige Transportbandschleife ausgebildet, deren Länge bzw. Laufzeit an die normalerweise zu erwartende maximale Reaktionszeit einer angeschlossenen, die gelesenen Daten auswertenden Datenverarbeitungsanlage angepaßt ist. Für den Belegpufferspeicher BPS sind ebensogut auch andere Speicherarten denkbar, z.B. Bündelspeicherung, Speicherrad, Kassettenspeicher usw..

Parallel zur mechanischen Pufferung der Belege erfolgt eine elektronische Speicherung der gelesenen Belegdaten BD in einem Belegdatenspeicher BDS, aus dem diese Daten dann weiter in die Zentraleinheit ZE einer Datenverarbeitungsanlage übertragen werden können. Dort werden aus den Belegdaten BD Steuerdaten CD gewonnen, mit denen die dem mechanischen Belegpufferspeicher BPS nachfolgenden Einrichtungen, beispielsweise die Mikrofilmeinrichtung MF und die Belegablage BA entsprechend gesteuert werden können. Die für den

Datentransfer, die Belegüberwachung und den Belegtransport zwischen Belegverarbeitungseinrichtung und Datenverarbeitungsanlage vorgesehene Steuerung CB ist über Steuerleitungen CL mit den einzelnen Funktionsmodulen verbunden. Jedes Funktionsmodul enthält seinerseits zum Zwecke der Steuerung und Überwachung der Belege jeweils Steuerorgane in Form von Lichtschranken, wobei die Lichtschranke LS1 in der Belegeingabe BE, die Lichtschranke LS2 in der Leseeinrichtung LE, die Lichtschranke LS3 am Ausgang des Belegpufferspeichers BPS, die Lichtschranke LS4 am Ausgang der Mikrofilmeinrichtung MF und weitere in der Zeichnung nicht dargestellte Lichtschranken am Eingang des oder gegebenenfalls mehrerer Ablagemodule und in jedem Ablagefach vorgesehen sind.

Durch die mechanische Belegpufferung wird in vorteilhafter Weise ein zeitunkritischer ON-LINE-Betrieb ermöglicht, da die Datenverarbeitungsanlage in der überwiegenden Zahl der Fälle in der Lage sein wird, die belegbezogenen Steuerdaten rechtzeitig bis zum Eintreffen des Belegs an der jeweils ersten zu steuernden Funktionseinheit bereitzustellen, so daß der Belegtransport nur in seltensten Fällen angehalten werden muß.

In diesen Sonderfällen, in denen die Datenverarbeitungsanlage aus irgendwelchen Gründen nicht in der Lage ist, die Steuerdaten rechtzeitig bereitzustellen, sei es weil die Datenverarbeitungsanlage anderweitig blockiert ist oder durch eine Zeichenrückweisung eine Korrektur erforderlich ist, wird ein Steuermechanismus ausgelöst, der einen Pufferüberlauf verhindert. In einem solchen Fall wird der Belegtransport automatisch gestopt, so daß auf der Transportstrecke befindliche Belege in definierter Lage verharren, bis ein Datentransfer mit der Datenverarbeitungsanlage wieder möglich ist.

Der Belegstop wird ausgelöst, wenn der Beleg einen besonderen Belegsensor, vorzugsweise die am Ausgang des Belegpufferspeichers vorgesehene Lichtschranke LS3 erreicht. Der beschriebene Pufferbetrieb bietet noch einen weiteren Vorteil. Die Belegdaten BD müssen nämlich nicht belegweise, sondern sie können mittels geeigneter Steuermittel vorzugsweise über mehrere Beleg geblockt übertragen werden. Die Datenverarbeitungsanlage muß also nicht jeden Beleg einzeln abhandeln, sondern sie kann mit einem Zugriff gleichzeitig mehrere Belege abarbeiten. Dabei ist die Anzahl der Belege pro Block variabel. In der Regel werden alle im Puffer gespeicherten Belegdaten zu einem Block zusammengefaßt, wenn der entsprechende Befehl von der Datenverarbeitungsanlage kommt.

Für den Fall, daß längere Pufferzeiten erforderlich sind, ist es zweckmäßig, wenn sowohl der mechanische Belegpufferspeicher als auch der dazugehörige elektronische Datenspeicher modularartig aufgebaut sind, weil dann durch Serienschaltung mehrerer Module eine beliebige Erweiterung möglich ist.

6 Patentansprüche
1 Figur

## Patentansprüche

1. Einrichtung zum Verarbeiten von maschinenlesbaren Belegen, bestehend aus einer Belegeingabe- bzw. Belegevereinzelungs-Vorrichtung, einer Beleg-Transportvorrichtung und einer Lesevorrichtung, sowie einer im ON-Line-Betrieb von einer Datenverarbeitungsanlage belegdatenabhängig steuerbaren Vorrichtung zur Belegablage mit gegebenenfalls vorgeschalteten Vorrichtungen zur Belegverfilmung, Belegcodierung usw., d a d u r c h g e k e n n z e i c h n e t , daß zur Erreichung eines zeitunkritischen ON-Line-Betriebes im Zuge der Beleg-Transport-Vorrichtung zwischen Lesevorrichtung und der ersten von der Datenverarbeitungsanlage steuerbaren Vorrichtung ein mechanischer Beleg-Pufferspeicher für die Pufferung durchlaufender Belege vorgesehen ist, dem zur parallelen Pufferung der gelesenen Belegdaten ein elektronischer Datenspeicher zugeordnet ist und daß im Zuge der Transportbahn des mechanischen Beleg-Pufferspeichers ein Beleg-Sensor vorgesehen ist, durch den der Belegtransport über die der Datenverarbeitungsanlage zugeordnete Steuereinrichtung in der Weise beeinflußbar ist, daß bei fehlender Koinzidenz zwischen Beleg und der von der Datenverarbeitungsanlage gesendeten belegbezogenen Steuerinformation im Falle nicht rechtzeitig eintreffender Steuerdaten der Belegtransport angehalten wird.

2. Einrichtung nach Anspruch 1, d a d u r c h g e k e n n z e i c h n e t , daß Steuerelemente vorgesehen sind, die den Belegtransport solange unterbrechen, bis die Steuerinformation für die erste zu steuernde Einrichtung übertragen ist.

0045021
80 P 8033 E

3. Einrichtung nach Anspruch 1 oder 2, d a d u r c h
g e k e n n z e i c h n e t , daß der mechanische Beleg-
Pufferspeicher und der dazugehörige elektronische Datenspeicher modularartig aufgebaut und durch Serienschaltung mehrerer Module entsprechend erweiterbar sind.

4. Einrichtung nach einem der vorhergehenden Ansprüche,
d a d u r c h   g e k e n n z e i c h n e t , daß der
mechanische Beleg-Pufferspeicher als Bandlaufstrecke aufgebaut ist.

5. Verfahren zum Verarbeiten von maschinenelesbaren Belegen, unter Verwendung einer Einrichtung nach den Ansprüchen 1 bis 4, d a d u r c h   g e k e n n z e i c h -
n e t , daß die Übertragung der belegbezogenen Daten zur
Datenverarbeitungsanlage einerseits und die Rücksendung
der Steuerinformationen von der Datenverarbeitungsanlage
andererseits für jeweils mehrere Belege geblockt erfolgt.

6. Verfahren nach Anspruch 5, d a d u r c h   g e k e n n -
z e i c h n e t , daß die Blocklänge und damit die Anzahl der an der Datenübertragung beteiligten Belege
variabel ist.

BE    LE    LS2    BPS    LS3    MF    LS4    BA

LS1    LK1    LK2

CL    BD

BDS

CL    CD    CD

CB

BD    CD

ZE

1/1

00045021